(19) Europäisches Patentamt
European Patent Office
Office européen des brevets

(11) **EP 3 166 242 B1**

(12) **EUROPEAN PATENT SPECIFICATION**

(45) Date of publication and mention
of the grant of the patent:
**15.05.2024   Bulletin 2024/20**

(21) Application number: **15193139.1**

(22) Date of filing: **05.11.2015**

(51) International Patent Classification (IPC):
**H04J 3/14** *(2006.01)*      **H04J 3/06** *(2006.01)*

(52) Cooperative Patent Classification (CPC):
**H04J 3/0667; H04J 3/14**

(54) **CLOCK SYNCHRONIZATION MONITORING IN AN ETHERNET-BASED NETWORK**

TAKTSYNCHRONISIERUNGSÜBERWACHUNG IN EINEM ETHERNETBASIERTEN NETZWERK

CONTRÔLE DE SYNCHRONISATION D'HORLOGE DANS UN RÉSEAU ETHERNET

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.05.2017   Bulletin 2017/19**

(73) Proprietor: **Robert Bosch GmbH
70442 Stuttgart (DE)**

(72) Inventor: **Diarra, Aboubacar
71706 Markgroeningen (DE)**

(56) References cited:
**WO-A2-2006/044139      US-A1- 2013 315 265**

**Description**

The invention relates to a method for monitoring clock synchronization errors in a network, in particular an Ethernet-based in-vehicle time- and safety-critical network.

One challenge in designing a time sensitive system is a common time base. The reason is that communicating devices in a network have different views of the current time, because they generally have different clock characteristics, for instance frequency drift, granularity, etc., and they often have different initial times. This situation leads to intolerable clock deviations in some automotive time- and safety-critical application, because these applications have strong requirements that aim to guarantee a safe car driving, particularly with respect to the whole traffic. Therefore, a strict time handling for in-vehicle networks is required. This is especially important for the interaction of several devices and/or electronic control units within a car, because they all must relay on the same time. Therefore, a time synchronization mechanism is used across the whole network.

IEEE 802.1 AS time synchronization protocol has been specified for establishing a common time base in Ethernet-based networks. It basically works on a master clock acting as a time reference by distributing its timing information to other devices via the network such that they are able to correct and thus synchronize their internal clocks in order to be in conformity with the master clock.

WO 2006/044139 A2 discloses a system and a method for time synchronizing nodes in an automotive network.

In critical automotive applications, devices handling critical packets or messages must have a common sense of time to avoid any jitter, unexpected delay, and a wrong interpretation of the actual situation which otherwise could cause dramatic consequences on the vehicle behavior. Therefore, it is imperative that a common time base is established in an in-vehicle time and safety critical network at start up time as well as during running time.

However, the network is not protected against all sorts of errors that can negatively influence the clock synchronization. For some safety critical applications, for instance applications dedicated to automated or semi-automated driving, it is necessary that such errors are detected in order to prevent vehicles from any dangerous behavior. However a mechanism for monitoring synchronization errors in Ethernet-based in-vehicle networks does not exists.

The present invention provides a clock synchronization monitoring mechanism for continuously monitoring the synchronization errors in a network. This allows to be aware of any failure which could negatively affect the system.

The invention is defined by the features of the independent claim. Some preferred embodiments are defined in the dependent claims. The invention enables each time sensitive device within a network to be aware of its current clock deviation with respect to the reference clock. A node or device knowing that its clock is unacceptably deviating from the reference clock can for instance stop sending critical data in order to avoid any dangerous behavior of the system and the car.

Brief description of the drawings

Embodiments of the present invention are illustrated by way of example and not imitation in the figures of the accompanying drawings, in which like references indicate similar elements and in which:

Figure 1    shows an example of a part of an in-vehicle network;

Figure 2    shows an example of a synchronization error test message transmission;

Figure 3    shows an example of a first part of the synchronization error monitoring mechanism;

Figure 4    shows an example of some error test acknowledgement messages transmitted in the network;

Figure 5    shows an example of clock deviation notification messages that are transmitted to a safety critical data center; and

Figure 6    is a float chart of a possible embodiment of the present invention.

In the following description, numerous specific details are introduced to provide a thorough understanding of, and enabling description for, embodiments of the suggested synchronization status monitoring mechanism. One skilled in the relevant art, however, will recognize that these embodiments can be practiced without one or more of the specific details, or with other components, systems, etc. In other instances, well known structures or operations are not shown or are not described in detail, to avoid obscuring aspects of the disclosed embodiments.

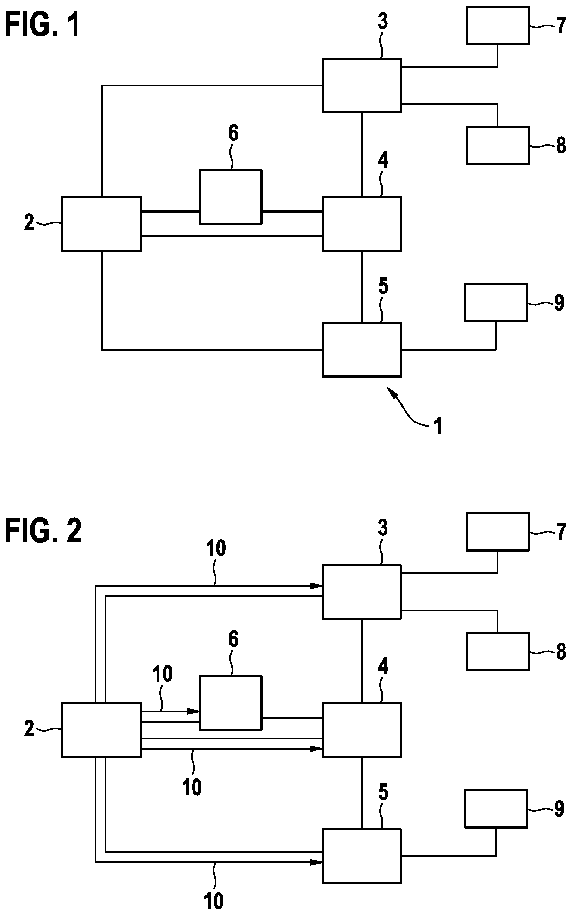

Figure 1 shows an example of an in-vehicle network 1 based on a tree topology that is used to illustrate the invention. Network 1 comprises a monitoring node 2, bridge and/or switch nodes 3, 4, 5, a master clock 6 and devices 7, 8, 9. Anyone of devices 7, 8, 9 is assumed to be a sender of critical data. In some embodiments, the master clock 6, also denoted as grand master, is considered to be also a receiver of critical data.

Monitoring node 2 is enabled to compute synchronization errors between some of the nodes within the network 1. Bridges and/or switches 3, 4, 5 can also be used for synchronization error calculation which means that several nodes can act as a monitoring node in different stages of the clock synchronization monitoring mechanism as will be further described below.

Figure 2 shows test messages that are also denoted as synchronization error test messages 10. Synchronization error test messages 10 are transmitted from monitoring node 2 to each neighboring node.

In the example shown in figure 2, monitoring node 2 sends synchronization test messages 10 to bridges and/or switches 3, 4, 5 as well as to master clock 6. It is assumed in this example that monitoring node 2 sends all test messages 10 simultaneously. Monitoring node 2 stores the sending time of these messages. If the test messages are not sent simultaneously, monitoring node 2 will save the transmission time of each of the test messages 10.

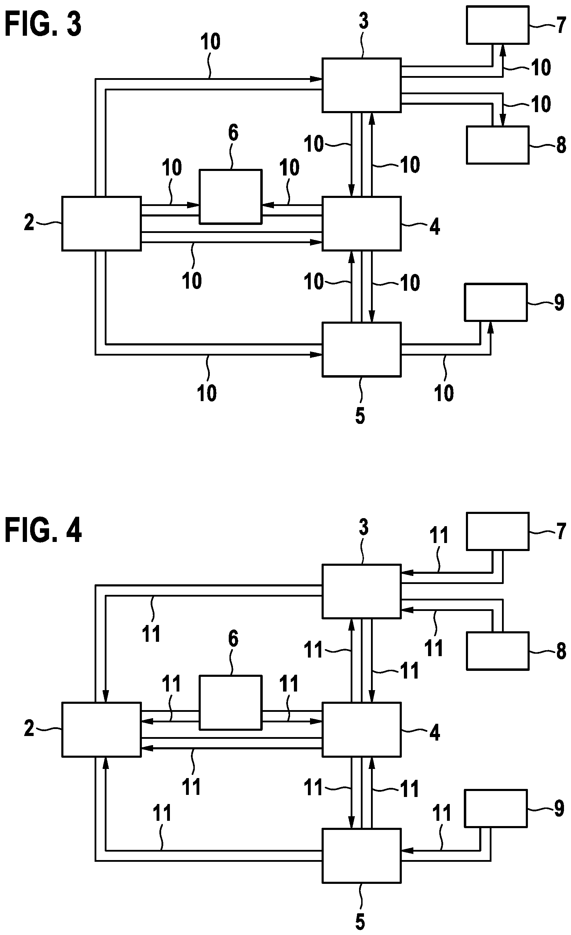

Figure 3 shows a more detailed example of the monitoring mechanism. Here, bridges and/or switches 3, 4, 5 also transmit synchronization error test messages 10 to each neighboring node. Each of bridges and/or switches 3, 4, 5 stores the sending time of the test messages 10.

Starting for example with monitoring node 2, monitoring node 2 sends at time t = t_test the synchronization error test messages 10 simultaneously to bridges and/or switches 3, 4, 5 and to master clock 6.

Bridge and/or switch 3 receives the test message at time t = t1, bridge and/or switch 4 receives the test message 10 from monitoring node 2 at time t = t2, bridge and/or switch 5 receives the test message 10 at time t = t3 and the master clock 6 receives test message 10 at time t = $t_{ref}$. The reception times of bridges and/or switches 3, 4, 5 and master clock 6 are defined according to their internal or local clocks.

According to a preferred embodiment, the output ports on monitoring node 2 have to be free, when the synchronization error test messages 10 are intended to be transmitted.

The transmission of synchronization error test messages 10 can in particular be periodically performed at a constant frequency. Preferably, a guard band has to be set-up. On each port, at the beginning of the guard band time in a given cycle i, other traffic than the synchronization error test messages is not allowed to be transmitted. In order to make sure that the port is free at the transmission point in time of synchronization error test messages 10, it is suggested that the guard band duration is set to be greater or equal to the transmission delay of the longest Ethernet frame transmitted by monitoring node 2.

Referring again to figure 3, each node receiving synchronization error test message 10 generates a time-stamp and stores this time-stamp. The time-stamp is generated according to the internal or local clock and can either be determined in software or by a hardware time-stamp unit (TSU) located either in the physical layer (PHY) of the node or in the Ethernet media access controller (MAC).

Figure 4 shows an example of the transmission of synchronization error test acknowledgement messages, also denoted acknowledgement messages 11. Each node having received a test message 10, sends an acknowledgement message 11 to the node from which it has received the test message 10. Each acknowledgement message 11 contains the time-stamp, which is the reception time of the test message 10. This means that the sender of the test message 10 is now informed of the reception time.

However, the reception time is determined based on the local time of the receiver of the test message 10. It is now assumed that each node receiving the acknowledgement messages 11 receives different reception times of its synchronization error test messages 10, it had sent before. It can then compute synchronization errors between different nodes. For example the monitoring node 2 might compute the following:

- Synchronization error (e) between bridge and/or switch 3 (denoted as b1) and bridge and/or switch 4 (denoted as b2): e (b1 → b2) = t1 - t2;

- synchronization error (e) between bridge/switch 3 (b1) and bridge/switch 5 (b3): e (b1 --), b3) = t1 - t3;

- synchronization error (e) between bridge/switch 4 and bridge/switch 5: e (b2 --), b3) = t2 - t3;

- synchronization error (e) between bridge/switch 3 and master clock 6: e (b1 → me) = t1 - tref;

- synchronization error (e) between bridge/switch 4 and master clock 6: e (b2 → me) = t2 - tref; and

- synchronization error (e) between bridge/switch 5 and master clock 6: e (b3 → mc) = t3 - tref.

Of course, bridges and/or switches 3, 4, 5 can calculate time deviations of the neighboring nodes in a similar way.

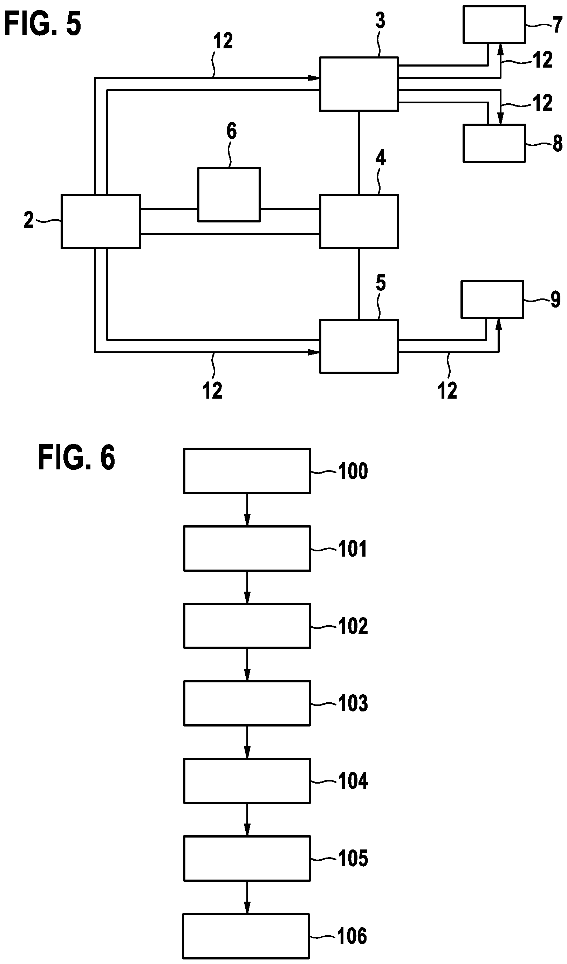

Figure 5 shows some clock deviation notification messages, also denote as deviation messages 12, that are transmitted to the nodes or devices 7, 8, 9 that are assumed to be critical data sender. In order to describe the principle of how a sender of critical data determines its clock deviations with respect to the reference clock, the following example is given:

Within the deviation messages 12 from monitoring node 2, some clock timing deviations are transmitted. For example, the deviation message 12 from monitoring node 2 to bridge and/or switch 3 comprises the clock timing deviation between bridge and/or switch 4 (b2) and master clock 6 (mc), which is:

$$e\ (b2 \rightarrow mc) = t2 - tref$$

In addition bridge and/or switch 3 may compute the synchronization error between each critical data sender node and bridge and/or switch 4 (b2). For example for the critical data sender node 7, this error is denoted as e (s7 → b2). Bridge and/or switch 3 will then send e (s7 → b2) and e (b2 → me) to the critical data sender node 7, which will then compute its time deviation with respect to the master block. In the given example,

$$e\ (s7 \rightarrow b2) = ts7 - tb2,$$

where ts7 defines the time at which node 7 has received the synchronization error test message 10 from bridge and/or switch 3 and tb2 is the time at which bridge and/or switch 4 has received the synchronization error test message 10 from bridge and/or switch 3.

Both time data, tb2 and ts7 are measured based on the local or internal clock of each device.

As a result, critical data sender node 7 will receive its own clock deviation from bridge and/or switch 4 and the synchronization error between bridge and/or switch 4 and master clock 6. So it will compute its clock time in deviation from master clock 6 (e (s7 → mc)) by calculating the sum of the two errors

$$e\ (s7 \rightarrow mc) = e\ (s7 \rightarrow b2) + e\ (b2 \rightarrow mc).$$

Figure 6 shows a float chart of an example embodiment. The method starts in a step 100, wherein at least monitoring node 6 transmits test messages 10 to each neighboring node 3, 4, 5, 6. Furthermore, in step 100 bridges and/or switches 3, 4, 5 transmit test messages 10 to their neighboring nodes as shown in figure 3.

In a step 101, the test messages 10 are received and each receiving node generates and stores a time-stamp that indicates the time of reception.

In a step 102 each node sends an acknowledgement message 11 back to the sender of the test message 10 (fig. 4), wherein each acknowledgement message 11 contains the reception time of receiving the test message.

In a step 103 monitoring node 2 computes deviation times as described above.

In a step 104 monitoring node 2 transmits the computed deviation messages 12 to at least some of the neighboring nodes. In particular monitoring node 2 sends the relevant deviation messages 12 to the bridges and/or switches 3, 5 that are connected with the critical data sender 7, 8, 9. In step 104, bridges and/or switches 3, 4 also transmit some of the computed deviations within deviation messages 12 as shown in figure 5.

In a step 105, critical data senders 7, 8, 9 receive the deviation messages 12. In a step 106 critical data sender nodes 7, 8, 9 compute their deviation with respect to the time of the master clock 6, as described above. Furthermore, in step 106 each of the critical data sender nodes 7, 8, 9 may decide, whether they keep on sending critical data or stop sending critical data, based on the computed deviations.

One of the benefits of the present invention is to improve reliability and safety in in-vehicle time- and safety-critical networks. For example, in automated or semiautomatic driving applications, the driver does not have the control of the car or has a limited control of it. In case of any problematic error, the invention can help to notify the driver that he or she should now take the control of the car, because the car cannot drive autonomously any longer without any safety risk. This is achieved by the inventive method, in that it allows a time sensitive device to get to know its time deviation from the master clock. By knowing this clock error, the device can perform necessary corrections or stop being part of the network.

**Claims**

1. Method for monitoring clock synchronization errors for a network (1), the method comprising the steps of

   - sending, by a monitoring node (2), a synchronization error test message (10) to at least two nodes (3, 4, 5, 6) in the network (1);
   - receiving, by the monitoring node (2), an acknowledgment message (11) from each of the at least two nodes (3, 4, 5, 6), wherein each acknowledgement message (11) comprises a time-stamp representing the local time at which the node (3, 4, 5, 6) has received the synchronization error test message (10); and
   - computing, by the monitoring node (2), synchronization errors based on the received time-stamps.

2. Method of claim 1, **characterized in** the further step of transmitting at least one computed synchronization error to at least one node in the network (1).

3. Method of claim 1 or 2, **characterized in that** one of the at least two nodes (3, 4, 5, 6) is a master clock (6).

4. Method of anyone of the preceding claims, **characterized in that** the at least two nodes (3, 4, 5, 6) are neighboring nodes to the monitoring node (2).

5. Method of anyone of the preceding claims, **characterized in that** synchronization error test messages (10) are sent to all nodes (7, 8, 9) that act as sender of critical data.

6. Method of anyone of the preceding claims, **characterized in that** synchronization error test messages (10) are only sent if the corresponding port at the monitoring node is free.

7. Method of anyone of the preceding claims, **characterized in that** the synchronization error test messages (10) are sent at a given transmission frequency.

8. Method of claim 7, **characterized in that** a guard band is used for providing the transmission frequency, wherein the guard band duration is set as the transmission delay of the longest Ethernet frame transmitted by the monitoring node (2).

9. Method of anyone of the preceding claims, **characterized in that** the time-stamp is created using a software or a hardware time-stamp unit, the time-stamp unit being located in the physical layer or in the Ethernet Media Access Controller of a network node 3, 4, 5, 6, 7, 8, 9.

10. Monitoring node (2) for a network (1), comprising means for

    - sending a synchronization error test message (10) to at least two nodes 3, 4, 5, 6) in the network (1);
    - receiving an acknowledgment message (11) from each of the at least two nodes 3, 4, 5, 6), wherein each acknowledgement message (11) comprises a time-stamp representing the local time at which the node 3, 4, 5, 6) has received the synchronization error test message (10); and
    - computing synchronization errors based on the received time-stamps.

11. Monitoring node of claim 10, **characterized in that** the monitoring node comprises means for transmitting at least one computed synchronization error to at least one node in the network (1).

12. A system for monitoring clock synchronization errors for a network (1), the system comprising:

    - a monitoring node (2) according to claim 10 or 11;
    - a master clock (6) comprising means for receiving a synchronization error test message (10) from monitoring node (2), means for generating and storing a time-stamp representing the local time at which the master clock (6) has received the synchronization error test message (10), and means for transmitting the time-stamp via an acknowledgement message (11) to monitoring node (2);
    - at least two bridge and/or switch nodes (3, 4, 5) enabled to fulfill bridging and/or switching tasks, wherein each of the at least two bridge and/or switch nodes (3, 4, 5) comprises means for

    - receiving a synchronization error test message (10) from a monitoring node (2) and/or from another bridge and/or switch node (3, 4, 5);
    - upon reception of the synchronization error test message (10), generating a time-stamp representing the local time at which the bridge and/or switch node (3, 4, 5) has received the synchronization error test message (10);
    - transmitting the time-stamp via an acknowledgement message (11) to the sender of the synchronization error test message;
    - computing clock deviations with respect to a reference clock, based on the generated time-stamps;
    - transmitting computed clock deviations to other bridge and/or switch nodes (3,4,5) within deviation messages (12); and
    - transmitting computed clock deviations to critical data sending nodes (7, 8, 9) within deviation messages (12); the system further comprising
    - a critical data sending node (7, 8, 9) comprising means for
    - receiving a synchronization error test message (10);
    - generating and storing a time-stamp representing the local time at which the critical data sending node (7, 8, 9) has received the synchronization error test message (10);
    - transmitting the time-stamp via an acknowledgement message (11) to the sender of the synchronization error test message (10);
    - receiving a deviation message (12) from the monitoring node (2) and/or from a bridge and/or switch node (3, 4, 5); and
    - computing clock deviations with respect to the time of the master clock (6) utilizing the data received via the deviation message (12).

13. The system of claim 12, **characterized in that** the monitor node (2) comprises means for executing a method according to anyone of claims 1 to 9.

14. A computer readable medium comprising computer executable instructions which when executed by a computer cause the computer to perform the method of anyone of claims 1 to 9.

**Patentansprüche**

1. Verfahren zum Überwachen von Taktsynchronisationsfehlern für ein Netzwerk (1), wobei das Verfahren die folgenden Schritte umfasst

    - Senden, durch einen Überwachungsknoten (2), einer Synchronisationsfehlertestnachricht (10) an mindestens zwei Knoten (3, 4, 5, 6) in dem Netzwerk (1);

- Empfangen, durch den Überwachungsknoten (2), einer Quittierungsnachricht (11) von jedem der mindestens zwei Knoten (3, 4, 5, 6), wobei jede Quittierungsnachricht (11) einen Zeitstempel umfasst, der die Ortszeit darstellt, zu der der Knoten (3, 4, 5, 6) die Synchronisationsfehlertestnachricht (10) empfangen hat; und
- Berechnen, durch den Überwachungsknoten (2), von Synchronisationsfehlern basierend auf den empfangenen Zeitstempeln.

2. Verfahren nach Anspruch 1, **gekennzeichnet durch** den weiteren Schritt Übertragen mindestens eines berechneten Synchronisationsfehlers an mindestens einen Knoten in dem Netzwerk (1).

3. Verfahren nach Anspruch 1 oder 2, **dadurch gekennzeichnet, dass** einer der mindestens zwei Knoten (3, 4, 5, 6) ein Haupttaktgeber (6) ist.

4. Verfahren nach einem der vorhergehenden Ansprüche, **dadurch gekennzeichnet, dass** die mindestens zwei Knoten (3, 4, 5, 6) an den Überwachungsknoten (2) angrenzende Knoten sind.

5. Verfahren nach einem der vorhergehenden Ansprüche, **dadurch gekennzeichnet, dass** Synchronisationsfehlertestnachrichten (10) an alle Knoten (7, 8, 9) gesendet werden, die als Sender von kritischen Daten dienen.

6. Verfahren nach einem der vorhergehenden Ansprüche, **dadurch gekennzeichnet, dass** Synchronisationsfehlertestnachrichten (10) nur gesendet werden, wenn der entsprechende Anschluss am Überwachungsknoten frei ist.

7. Verfahren nach einem der vorhergehenden Ansprüche, **dadurch gekennzeichnet, dass** die Synchronisationsfehlertestnachrichten (10) mit einer vorgegebenen Übertragungsfrequenz gesendet werden.

8. Verfahren nach Anspruch 7, **dadurch gekennzeichnet, dass** ein Sicherheitsband zum Bereitstellen der Übertragungsfrequenz verwendet wird, wobei die Sicherheitsbanddauer als die Übertragungsverzögerung des längsten durch den Überwachungsknoten (2) übertragenen Ethernet-Frames eingestellt wird.

9. Verfahren nach einem der vorhergehenden Ansprüche, **dadurch gekennzeichnet, dass** der Zeitstempel unter Verwendung einer Software- oder einer Hardwarezeitstempeleinheit erstellt wird, wobei sich die Zeitstempeleinheit in der Bitübertragungsschicht oder in der Ethernet-Medienzugriffssteuerung eines Netzwerkknotens 3, 4, 5, 6, 7, 8, 9) befindet.

10. Überwachungsknoten (2) für ein Netzwerk (1), umfassend Mittel zum

- Senden einer Synchronisationsfehlertestnachricht (10) an mindestens zwei Knoten 3, 4, 5, 6) in dem Netzwerk (1) ;
- Empfangen einer Quittierungsnachricht (11) von jedem der mindestens zwei Knoten 3, 4, 5, 6), wobei jede Quittierungsnachricht (11) einen Zeitstempel umfasst, der die Ortszeit darstellt, zu der der Knoten 3, 4, 5, 6) die Synchronisationsfehlertestnachricht (10) empfangen hat; und
- Berechnen von Synchronisationsfehlern basierend auf den empfangenen Zeitstempeln.

11. Überwachungsknoten nach Anspruch 10, **dadurch gekennzeichnet, dass** der Überwachungsknoten Mittel zum Übertragen mindestens eines berechneten Synchronisationsfehlers an mindestens einen Knoten in dem Netzwerk (1) umfasst.

12. System zum Überwachen von Taktsynchronisationsfehlern für ein Netzwerk (1), wobei das System umfasst:

- einen Überwachungsknoten (2) nach Anspruch 10 oder 11;
- einen Haupttaktgeber (6), umfassend Mittel zum Empfangen einer Synchronisationsfehlertestnachricht (10) von dem Überwachungsknoten (2), Mittel zum Erzeugen und Speichern eines Zeitstempels, der die Ortszeit darstellt, zu der der Haupttaktgeber (6) die Synchronisationsfehlertestnachricht (10) empfangen hat, und Mittel zum Übertragen des Zeitstempels über eine Quittierungsnachricht (11) an den Überwachungsknoten (2) ;
- mindestens zwei Überbrückungs- und/oder Vermittlungsknoten (3, 4, 5), die zum Erfüllen von Überbrückungs- und/oder Vermittlungsaufgaben fähig sind, wobei jeder der mindestens zwei Überbrückungs- und/oder Vermittlungsknoten (3, 4, 5) Mittel umfasst zum
- Empfangen einer Synchronisationsfehlertestnachricht (10) von einem Überwachungsknoten (2) und/oder von einem anderen Überbrückungs- und/oder Vermittlungsknoten (3, 4, 5) ;
- bei Empfang der Synchronisationsfehlertestnachricht (10), Erzeugen eines Zeitstempels, der die Ortszeit darstellt, zu der der Überbrückungs- und/oder Vermittlungsknoten (3, 4, 5) die Synchronisationsfehlertestnachricht (10) empfangen hat;
- Übertragen des Zeitstempels über eine Quittierungsnachricht (11) an den Sender der Synchronisationsfehlertestnachricht;
- Berechnen von Taktabweichungen in Bezug auf einen Bezugstakt basierend auf den erzeugten Zeitstempeln;
- Übertragen berechneter Taktabweichungen an andere Überbrückungs- und/oder Vermittlungsknoten (3, 4, 5) in Abweichungsnachrichten (12); und
- Übertragen berechneter Taktabweichungen an Knoten (7, 8, 9) zum Senden kritischer Daten in Abweichungsnachrichten (12); wobei das System ferner umfasst
- einen Knoten (7, 8, 9) zum Senden kritischer Daten, umfassend Mittel zum
- Empfangen einer Synchronisationsfehlertestnachricht (10);
- Erzeugen und Speichern eines Zeitstempels, der die Ortszeit darstellt, zu der Knoten (7, 8, 9) zum Senden kritischer Daten die Synchronisationsfehlertestnachricht (10) empfangen hat;
- Übertragen des Zeitstempels über eine Quittierungsnachricht (11) an den Sender der Synchronisationsfehlertestnachricht (10);
- Empfangen einer Abweichungsnachricht (12) von dem Überwachungsknoten (2) und/oder von einem Überbrückungs- und/oder Vermittlungsknoten (3, 4, 5); und
- Berechnen von Taktabweichungen in Bezug auf die Zeit des Haupttaktgebers (6) unter Verwendung der über die Abweichungsnachricht (12) empfangenen Daten.

13. System nach Anspruch 12, **dadurch gekennzeichnet, dass** der Überwachungsknoten (2) Mittel zum Ausführen eines Verfahrens nach einem der Ansprüche 1 bis 9 umfasst.

14. Computerlesbares Medium, das computerausführbare Anweisungen umfasst, die, wenn sie durch einen Computer ausgeführt werden, den Computer veranlassen, das Verfahren nach einem der Ansprüche 1 bis 9 durchzuführen.

**Revendications**

1. Procédé de contrôle d'erreurs de synchronisation d'horloge pour un réseau (1), le procédé comprenant les étapes suivantes

    - l'envoi, par un noeud de contrôle (2), d'un message de test d'erreur de synchronisation (10) à au moins deux noeuds (3, 4, 5, 6) dans le réseau (1);
    - la réception, par le noeud de contrôle (2), d'un message d'accusé de réception (11) depuis chacun des au moins deux noeuds (3, 4, 5, 6), dans lequel chaque message d'accusé de réception (11) comprend une estampille temporelle représentant l'heure locale à laquelle le noeud (3, 4, 5, 6) a reçu le message de test d'erreur de synchronisation (10); et
- le calcul, par le noeud de contrôle (2), d'erreurs de synchronisation sur la base des estampilles temporelles reçues.

2. Procédé selon la revendication 1, **caractérisé par** l'étape supplémentaire de transmission d'au moins une erreur de synchronisation calculée à au moins un noeud dans le réseau (1).

3. Procédé selon la revendication 1 ou 2, **caractérisé en ce que** l'un des au moins deux noeuds (3, 4, 5, 6) est une horloge maître (6).

4. Procédé selon l'une quelconque des revendications précédentes, **caractérisé en ce que** les au moins deux noeuds (3, 4, 5, 6) sont des noeuds voisins du noeud de contrôle (2).

5. Procédé selon l'une quelconque des revendications précédentes, **caractérisé en ce que** des messages de test d'erreur de synchronisation (10) sont envoyés à tous les noeuds (7, 8, 9) qui envoient des données critiques.

6. Procédé selon l'une quelconque des revendications précédentes, **caractérisé en ce que** des messages de test d'erreur de synchronisation (10) sont envoyés uniquement si le port correspondant du noeud de contrôle est libre.

7. Procédé selon l'une quelconque des revendications précédentes, **caractérisé en ce que** les messages de test d'erreur de synchronisation (10) sont envoyés à une fréquence de transmission donnée.

8. Procédé selon la revendication 7, **caractérisé en ce qu'**une bande de garde est utilisée pour fournir la fréquence de transmission, dans lequel la durée de la bande de garde est définie comme le retard de transmission de la trame Ethernet la plus longue transmise par le noeud de contrôle (2).

9. Procédé selon l'une quelconque des revendications précédentes, **caractérisé en ce que** l'estampille temporelle est créée au moyen d'une unité d'estampille temporelle logicielle ou matérielle, l'unité d'estampille temporelle étant située dans la couche physique ou dans le contrôleur d'accès au support Ethernet d'un noeud de réseau (3, 4, 5, 6, 7, 8, 9).

10. Noeud de contrôle (2) pour un réseau (1), comprenant des moyens pour

    - envoyer un message de test d'erreur de synchronisation (10) à au moins deux noeuds (3, 4, 5, 6) dans le réseau (1);
    - recevoir un message d'accusé de réception (11) depuis chacun des au moins deux noeuds (3, 4, 5, 6), dans lequel chaque message d'accusé de réception (11) comprend une estampille temporelle représentant l'heure locale à laquelle le noeud (3, 4, 5, 6) a reçu le message de test d'erreur de synchronisation (10) ; et
- calculer des erreurs de synchronisation sur la base des estampilles temporelles reçues.

11. Noeud de contrôle selon la revendication 10, **caractérisé en ce que** le noeud de contrôle comprend des moyens pour transmettre au moins une erreur de synchronisation calculée à au moins un noeud dans le réseau (1).

12. Système de contrôle d'erreurs de synchronisation d'horloge pour un réseau (1), le système comprenant :

- un noeud de contrôle (2) selon la revendication 10 ou 11 ;
- une horloge maître (6) comprenant des moyens de réception d'un message de test d'erreur de synchronisation (10) depuis un noeud de contrôle (2), des moyens de génération et de stockage d'une estampille temporelle représentant l'heure locale à laquelle l'horloge maître (6) a reçu le message de test d'erreur de synchronisation (10), et des moyens de transmission de l'estampille temporelle par le biais d'un message d'accusé de réception (11) au noeud de contrôle (2) ;
- au moins deux noeuds de pontage et/ou de commutation (3, 4, 5) activés pour remplir des tâches de pontage et/ou de commutation, dans lequel chacun des au moins deux noeuds de pontage et/ou de commutation (3, 4, 5) comprend des moyens pour
- recevoir un message de test d'erreur de synchronisation (10) depuis un noeud de contrôle (2) et/ou depuis un autre noeud de pontage et/ou de commutation (3, 4, 5) ;
- suite à la réception du message de test d'erreur de synchronisation (10), générer une estampille temporelle représentant l'heure locale à laquelle le noeud de pontage et/ou de commutation (3, 4, 5) a reçu le message de test d'erreur de synchronisation (10) ;
- transmettre l'estampille temporelle par le biais d'un message d'accusé de réception (11) à l'expéditeur du message de test d'erreur de synchronisation ;
- calculer des écarts d'horloge par rapport à une horloge de référence, sur la base des estampilles temporelles générées ;
- transmettre des écarts d'horloge calculés à d'autres noeuds de pontage et/ou de commutation (3, 4, 5) dans des messages d'écart (12) ; et

- transmettre des écarts d'horloge calculés à des noeuds d'envoi de données critiques (7, 8, 9) dans des messages d'écart (12) ; le système comprenant en outre
- un noeud d'envoi de données critiques (7, 8, 9) comprenant des moyens pour
- recevoir un message de test d'erreur de synchronisation (10) ;
- générer et stocker une estampille temporelle représentant l'heure locale à laquelle le noeud d'envoi de donnés critiques (7, 8, 9) a reçu le message de test d'erreur de synchronisation (10) ;
- transmettre l'estampille temporelle par le biais d'un message d'accusé de réception (11) à l'expéditeur du message de test d'erreur de synchronisation (10) ;
- recevoir un message d'écart (12) depuis le noeud de contrôle (2) et/ou depuis un noeud de pontage et/ou de commutation (3, 4, 5) ; et
- calculer des écarts d'horloge par rapport à l'heure de l'horloge maître (6) au moyen des données reçues par le biais du message d'écart (12).

13. Système selon la revendication 12, **caractérisé en ce que** le noeud de contrôle (2) comprend des moyens d'exécution d'un procédé selon l'une quelconque des revendications 1 à 9.

14. Support lisible par ordinateur, comprenant des instructions exécutables par ordinateur qui, lorsqu'elles sont exécutées par un ordinateur, amènent l'ordinateur à exécuter le procédé selon l'une quelconque des revendications 1 à 9.

FIG. 1

FIG. 2

**FIG. 3**

**FIG. 4**

EP 3 166 242 B1

**FIG. 5**

**FIG. 6**

11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006044139 A2